# EUROPEAN PATENT SPECIFICATION

(11) **EP 2 371 090 B1**
(45) Date of publication and mention of the grant of the patent: **13.02.2013**
(21) Application number: 09798962.8
(22) Date of filing: 14.12.2009
(51) Int. Cl.: H04L 12/26, H04L 29/06

(54) **DETECTION OF PARTICULAR TRAFFIC IN COMMUNICATION NETWORKS**
DETEKTION VON BESTIMMTEM VERKEHR IN KOMMUNIKATIONSNETZEN
DÉTECTION D'UN TRAFIC PARTICULIER DANS DES RÉSEAUX DE COMMUNICATION

(30) Priority: 17.12.2008 US 337254
(43) Date of publication of application: 05.10.2011
(73) Proprietor: Telefonaktiebolaget L M Ericsson (PUBL), 164 83 Stockholm (SE)
(72) Inventor: POURZANDI, Makan, Montreal Québec H4A 2L1 (CA); LILJENSTAM, Michael, SE-17147 Solna (SE); MÉHES, András, SE-17240 Sundbyberg (SE); NASLUND, Mats, SE-168 36 Bromma (SE)
(74) Representative: HOFFMANN EITLE
(86) International application number: PCT/IB2009/055745
(87) International publication number: WO 2010/070578

(56) References cited:
- US-A1- 2004 193 923
- SNAPP S R ET AL: "A system for distributed intrusion detection" COMPCON SPRING '91. DIGEST OF PAPERS SAN FRANCISCO, CA, USA 25 FEB.-1 MARCH 1991, LOS ALAMITOS, CA, USA,IEEE COMPUT. SOC, US, 25 February 1991 (1991-02-25), pages 170-176, XP010022505 ISBN: 978-0-8186-2134-5

## Description

### TECHNICAL FIELD

The present invention generally relates to communication networks. More specifically, the present invention is concerned with a method and system for detecting a particular traffic, such as unwanted traffic, traveling in the communication networks.

### BACKGROUND

Over the past few decades, telecommunication networks have experienced an incredible growth and expansion. Because of the ever increasing demands from the users, operators offering telecommunication services need constantly to adapt their networks so as to be able to respond to the requests and demands of the users. The mobile networks have evolved from supporting simple voice services to supporting rich multimedia services, such as video sharing, video-on-demand, streaming, music download, etc. These networks are made possible through deployment of broadband access networks and convergence of technologies and networks, such as mobile and IP networks. New networks also support new communication models, e.g. group/community communications.

In order to take advantage of the broadband access networks and to enable coexistence of the different technologies, 3GPP has developed a new core network called the Evolved Packet Core (EPC). The EPC has been planned for 3GPP Release 8 and can be used by several access networks, such as long-term evolution (LTE), high-speed packet access/high speed packet access evolved (HSPA/HSPA+), and non-3GPP networks, e.g. WiMAX.

The EPC along with a set of access systems, such as evolved universal terrestrial radio access network (eUTRAN) or UTRAN, constitute the Evolved Packet System (EPS) network. The EPS network represents a migration from the traditional hierarchical system architecture to a flattened architecture.

However, in such an EPS network, SPAM, phising, virus, malicious software (or malware) or any unwanted traffic can become a major potential problem by creating additional traffic in the network, which can then contribute to creating bottlenecks. Also, when the unwanted traffic, such as viruses, is generated by the mobile nodes, the unwanted traffic can spread all over the mobile network. Furthermore, more and more powerful mobile devices run on open technologies, such as Java and Linux, therefore, the surface attack can be increased for these mobile devices.

Current solutions under discussion for combating unwanted traffic in communication networks generally use unified threat management (UTM), implemented in a node of the networks. However, these solutions use a centralized architecture in which, for example, the threat analysis and detection are provided by a central node.

A solution is therefore needed that allows proper threat management or detection of a particular traffic in a network, such as a network with a flattened architecture, while remaining flexible to the network's characteristics. US 2004/193923 A1 shows a system and method to protect an electronic network, wherein one or more agents SNAPP S R ET AL: "A system for distributed intrusion detection" COMPCON SPRING '91. DIGEST OF PAPERS SAN FRANCISCO, CA, USA 25 FEB.-1 MARCH 1991, LOS ALAMITOS, CA, USA, IEEE COMPUT. SOC, US, 25 February 1991 (1991-02-25), pages 170-176, XP010022505 ISBN: 978-0-8186-2134-5within the electronic network and perform an initial assessment of the electronic network to determine normal activity. The electronic network is then monitored for abnormal activity using the agents, and protected by blocking the abnormal activity using the agents.
Further, Snapp et al "A system for distributed intrusion detection" IEEE COMPUT. SOC, US, 25 February 1991 (1991-02-25), pages 170-176 discloses a network intrusion-detection concept that is extended from the local area network environment to arbitrarily wider areas, with the network topology being arbitrary as well. Therein, the generalized distributed environment is heterogeneous, i.e. the network nodes can be hosts or servers from different vendors, or some of them could be LAN managers.

### SUMMARY

More specifically, in accordance with the present invention, there is provided a method for detecting a particular data traffic in a communication network having a plurality of nodes, as defined in claim 1.

According to another aspect of the present invention, there is provided a network node for detecting a particular traffic in a communication network having a plurality of nodes, as defined in claim 11.

The foregoing and other objects, advantages and features of the present invention will become more apparent upon reading of the following non-restrictive description of illustrative embodiments thereof, given by way of example only with reference to the accompanying drawings.

### BRIEF DESCRIPTION OF THE DRAWINGS

In the appended drawings:

FIG. 1 is a schematic view of an evolved packet system (EPS) network;

FIG. 2 is a schematic block diagram of a particular traffic detecting system according to a non-restrictive illustrative embodiment of the present invention;

FIG. 3 is a schematic block diagram of an inspection station, implemented in a node of the EPS network of FIG. 1;

FIG. 4 is a schematic block diagram of a terminal node;

FIG. 5 is a flow chart illustrating a method for detecting a particular traffic in the EPS network of FIG. 1, according to a non-restrictive illustrative embodiment of the present invention; and

FIG. 6 is a flow chart illustrating an implementing example of the method for detecting a particular traffic in the EPS network of FIG. 1, as illustrated in FIG. 5.

### DETAILED DESCRIPTION

In the following description, non-restrictive illustrative embodiments of the present invention will be described in the context of the EPS network. However the embodiments of the present invention are not restricted to such a network and can be applied to other networks with flattened architectures or many other communication networks. For example, the embodiment of the present invention can be used in a network having a plurality of nodes, the plurality of nodes collaborating with each other for detecting a particular traffic.

Also, it should be noted that in the following description, the term "inspectors" can be interchangeably used with the term "agents" to mean the same object and/or function, without departing from the scope of the present invention.

Generally stated, the non-restrictive illustrative embodiments of the present invention provides for detection of a particular traffic, which can be any unwanted or wanted traffic, in a communication network or more particularly in a mobile network. Even though detection of the unwanted traffic is explained in more detail in the following description, embodiments of the present invention also provide for detection of any particular traffic, which can be a wanted or desired traffic, such as voice data for example.

The illustrative embodiments of the present invention use a distributed, incremental and opportunistic system and method for detecting the particular traffic. By distributed, it is meant that the detection of the particular traffic can be done in different nodes of the communication network and applied to different data flows. The detection of the particular traffic can be provided by a list of detecting scans or analyses for example, this list being called the detection list. By incremental, it is meant that the amount or number of scans applied to the different data flows can be accumulated each time that the different data flows go through a node. By opportunistic, it is meant that depending on the available load or available resources of each node, each node can choose a different number, or subset, of scans that it can handle for application to the different data flows going through the node. By being flexible in terms of capacity (number or size of the subset of applied scans) and by distributing the detection over the plurality of nodes in the network 10, the latency in the network can be reduced. Indeed, the traffic is less likely to be blocked at one node, which was the case in UTM for example where the central node had to apply all the scans in a detection list to the data flows, but rather the traffic can flow from nodes to nodes.

Furthermore, in the non-restrictive embodiments of the present invention, a terminal node is provided. The terminal node makes sure that all the necessary detecting scans in the detection list are applied to the different data flows when the data flows go through the terminal node. Therefore, the desired scans are less likely to be omitted in the detection of the particular traffic in the communication network. It should be noted that by necessary scans, it is meant all the detecting scans which are deemed necessary by security authorities, for instance, for detecting a particular traffic.

The EPS network can support all IP-based services, such as voice, video, rich media and messaging with end-to-end Quality of Service (QoS) for example. The EPS network architecture also enables improved connections and hand-over to other fixed-line and wireless access technologies while giving an operator the ability to deliver a seamless mobility experience.

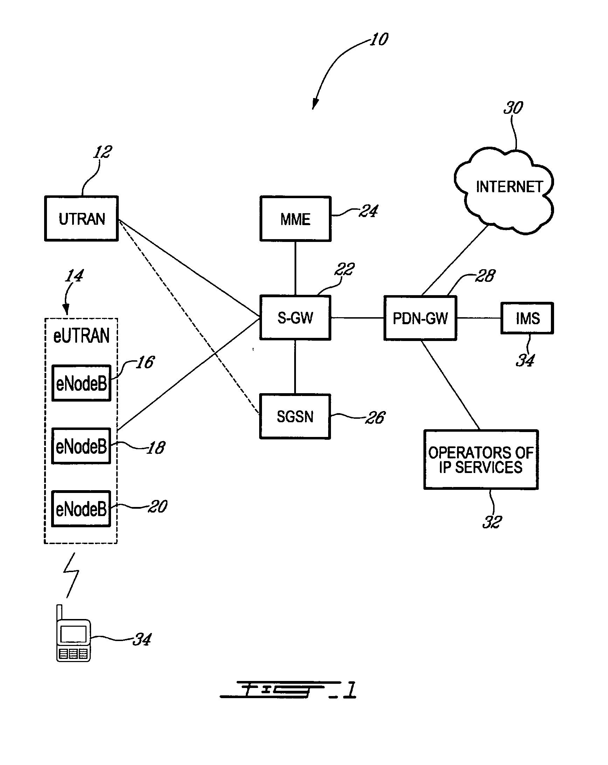

Now turning to Figure 1, an architecture of the EPS network will be described.

The EPS network 10 generally comprises two types of nodes, gateways and base stations, through which a user equipment (UE) 34 can access the network and the services it provides. The base stations comprise for example those of the UTRAN 12 and the eUTRAN 14.

The eUTRAN 14 is connected to a gateway, such as a serving gateway (S-GW) 22. The S-GW 22 is further connected to a mobility management entity (MME) 24. The S-GW 22 can be further still connected to a Serving GPRS Support Node (SGSN) 26 and to a packet data network gateway (PDN-GW) 28.

Furthermore, the PDN-GW 28 can be connected to internet 30 and/or operators 32, which offer IP services for example, and to an IP Multimedia Subsystem (IMS) 34.

More specifically, the UTRAN 12 comprises nodes B and radio network controllers RNC (not shown), which are well-known in the art. The eUTRAN 14 comprises a plurality of evolved nodes B, called eNode B. In Figure 1, only three (3) of such eNodes B, 16, 18 and 20 have been depicted as a non-restrictive example. The eUTRAN 14 also comprises some radio network controllers (not shown). The UTRAN 12 and the eUTRAN 14 provide for radio access to the EPS network 10 for the UE 34. The EPS network 10 can select the appropriate access system, between the UTRAN 12 or eUTRAN 14 for example, in order to better meet the preferences of an operator and/or the user experience.

Also, the eNodes B, 16, 18 and 20 can contain the following functions: the long term evolution (LTE) physical layer (PHY), the Media Access Control (MAC), the Radio Link Control (RLC), Packet Data Control Protocol (PDCP) layers, etc. Accordingly, they can perform tasks such as resource management, admission control, air interface security, scheduling and enforcement of negotiated QoS for example.

The S-GW 22 acts as a local mobility anchor for guiding, forwarding and receiving data packets to and from the UE 34 via the eNodes B 16, 18 and 20. Furthermore, during inter-eNode B handovers, the S-GW 22 acts as a mobility anchor for the user plane. It can also act as an anchor for mobility between the LTE technology and other 3GPP and non-3GPP technologies.

The MME 24 manages the mobility of the UE 34 and handles control signaling for mobility of the UE 34. For instance, when the UE 34 is in an idle mode, the MME 24 is responsible for tracking the UE 34 and the paging procedure that can include retransmissions. The MME 24 can be also involved in the bearer activation/deactivation process. Furthermore, the MME 24 can interact with a Home Subscriber Server (not shown) so as to authenticate the UE 34 or its user/subscriber.

The UE 34 can be a mobile node, such as a cell-phone, a personal digital assistant (PDA), a laptop or any other wireless devices. In case of non-3GPP technologies, the UE 34 may also be a wireline device.

The PDN-GW 28 interfaces with external networks such as Internet 30 and IMS 34 and is responsible for IP functions such as address locations, routing, etc.

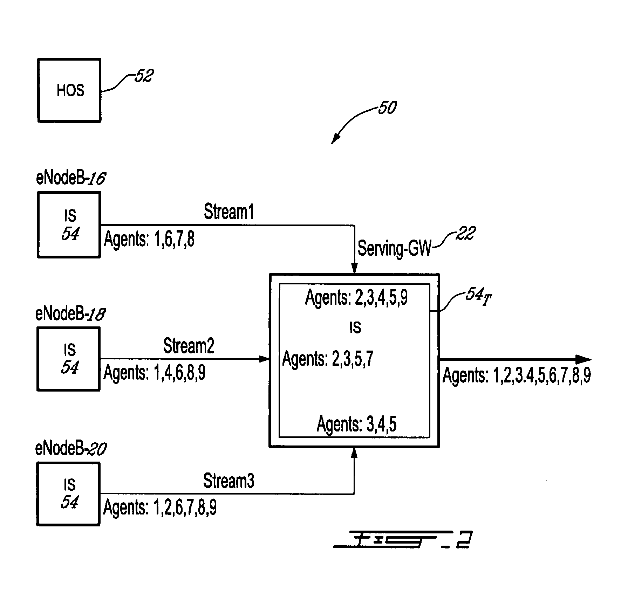

In the context of combating SPAM, viruses, and other kinds of unwanted traffic which may propagate through a communication network, such as the EPS network 10, detection of a particular traffic means detection of the unwanted traffic. In the following, a detecting system according to a non-restrictive illustrative embodiment of the present invention, as depicted in Figure 2, will be described in the context of detecting such unwanted traffic. However, the detecting system is not restricted to such a context and can be used for other cases, as will be described hereinafter as well.

In Figure 2, the detecting system 50 comprises a generator 52, called the Head Office Security (HOS) agency and a plurality of inspection stations (IS) 54, which is hosted in a plurality of nodes in the network 10. One of the IS 54 is referred to as a terminal IS 54_{T}. The node hosting the terminal IS 54_{T} is called the terminal node. The number of IS 54 in the network 10 can be determined according to parameters such as the size, complexity and QoS of the network 10 for example.

The generator 52 (or HOS agency) generates different inspectors and detecting scans, which are carried by the inspectors and used for detecting the unwanted traffic going through the EPS network 10, as will be explained hereinbelow. The generator 52 can be a piece of software, implemented in any network nodes, such as a network controller, a router, an eNode B or a gateway of the EPS network 10. Also, more than one generators 52 can be implemented in the EPS network 10, depending on the needs and size of the network 10 or on the network parameters or administrative issues (only one HOS agency is shown in Figure 2).

Additionally and/or alternatively a recursive approach for generating inspectors and detecting scans can be provided. For example, the generator 52 can generate additional sub-generators (not shown) to be hosted in other nodes, those sub-generators in turn generating the inspectors/detecting scans and/or yet further sub-generators, etc.

The different inspectors and detecting scans generated by the generator 52 are then distributed to the different nodes in the EPS network 10, such as the eNodes B 16, 18 and 20, and the S-GW 22. The distribution of the generated inspectors and detecting scans to the different nodes can be done according to the specificities and needs of each node, such as its geographical context, and the specificities and needs of the EPS network 10.

The different inspectors received and hosted by a node form an Inspection Station (IS) 54. As an example, in Figure 2, four (4) IS 54 are illustrated. It should be noted that three (3) of the IS 54 are hosted in three (3) eNodes B 16, 18 and 20, and one (1) of the IS 54 is hosted in a gateway, the S-GW 22. Also, the IS 54 hosted in the S-GW 22 can be assumed to be the terminal IS 54_{T}, for example.

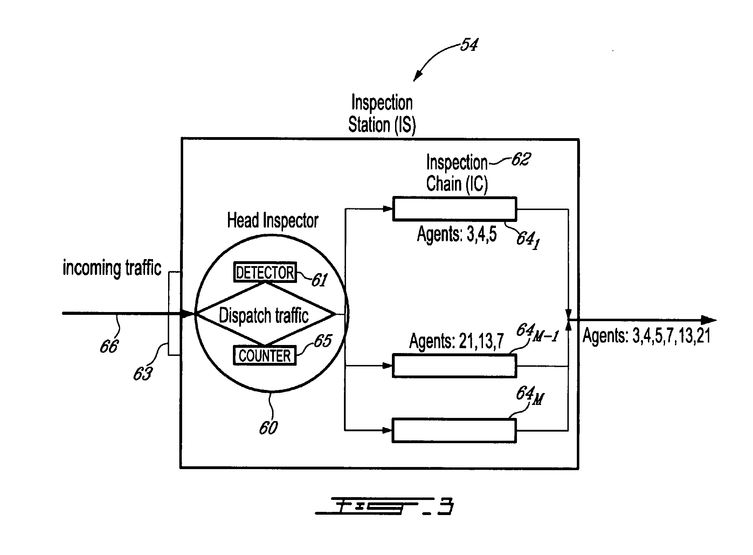

Now, turning to Figure 3, an inspection station IS 54, other than the terminal IS 54_{T} at the terminal node, will be described in more detail according to the non-restrictive illustrative embodiment of the present invention.

As mentioned earlier, the IS 54 can be hosted in a node, such as the eNode B 16, 18 or 20, or in a gateway.

The IS 54 comprises the inspectors received from the HOS agency or generator 52. The inspectors are of two (2) types: a head inspector (HI) 60 and a plurality of inspectors carrying the detecting scans generated by the generator 52 as well. The plurality of inspectors carrying the detecting scans forms an inspection chain 62, which allows for performing analyses on the different data flows passing through the hosting node. The head inspector 60 can comprise a counter 65 and a detector 61. Furthermore, the IS 54 can further comprise an input 63 for receiving the incoming data traffic 66.

More specifically, each inspector can be a software agent and can apply its detecting scans to the different data flows, so as to perform some specific pattern matching on the different data flows. Each pattern can define a virus, SPAM, or any unwanted traffic, for example. An inspector can have only one pattern to match or several patterns to match. The HI 60 keeps a list of all the inspectors present in the IS 54 and a list of all the detecting scans generated by the generator 52; this list is referred to as the detection list.

The role of the head inspector 60 comprises managing the inspectors forming the inspection chain 62 in the IS 54 and separating the incoming data traffic 66 into different types of data flows 64₁ to 64_{M}, such as HTML, SSL, Voice, etc. For example, the head inspector 62 can act as a dividing module in this case. When the head inspector 60 receives a new inspector and/or a new detecting scan from the generator 52, it updates its list of inspectors and its detection list of detecting scans and then assigns the new inspector and detecting scan to a type of data flows 64m, where m=1 to M, to process. The head inspector 60 can also remove, through the counter 65 for example, an inspector and a detecting scan, which has become useless, from its list for example. In that situation, the head inspector 60 will need to communicate first with the terminal node, as will be explained hereinbelow. Furthermore, the head inspector 60 can also monitor the detection process applied through the inspection chain 62, to the different types of data flows 64₁ to 64_{M}. More specifically, the plurality of inspectors of the inspection chain 62 applies their detecting scans, which correspond to different SPAM, viruses and other unwanted traffic signatures or patterns, to the different data flows, each detecting scan being identified by an ID. When a match is found in the signatures or patterns, the match is reported to the head inspector 60 and the detected unwanted data flow is then discarded or removed from the network 10 by the inspection chain 62. For example, the inspection chain 62 can refrain from forwarding the detected unwanted traffic to the next node in the network 10. Also, the network 10 can identify the user who has generated the detected unwanted traffic and block that user from accessing the network 10. Furthermore, the ID of each applied scan is put into a list, which is then transmitted to the HI 60. The ID list of the already applied scans is forwarded to the next node where the data traffic goes to. The HI 60 therefore also keeps the ID list of the detecting scans which have been already applied to the data traffic or to be applied to the data flow, before the data traffic is sent to a next node as an outgoing traffic, the next node being identified from the data traffic.

As a non-limitative example in Figure 3, the head inspector 60 assigns the inspectors or agents 3, 4 and 5 to the data flow 64₁, and the agents 21, 13 and 7 to the data flow 64_{M-1}.

The counter 65 allows for measuring the number of hits for each particular inspector and its detecting scans that have been used for different data traffic flowing through the network 10. The number of hits for each inspector and its detecting scans is an indication of the performance of the inspector and its detecting scans. Based on this number, an inspector along with its detecting scans can be removed from the IS 54, when compared with the performance of the other inspectors and their detecting scans in the IS 54, its performance being lower than the other performances. It should be noted that the counter 65 can be implemented outside of the HI 60, such as a standalone unit, for example.

The detector 61 allows for determining detecting scans from the detection list which have been already applied to a current data flow and at least one detecting scan which still need to be applied to the current data flow. Generally, the detector 61 receives the ID list of already applied detecting scans from a previous node and then selects the subset of detecting scans among the at least one detecting scans to be applied to the current data flow. The inspection chain 62 can then apply the selected subset of detecting scans to the current data flow. It should be noted that the detector 61 can be also implemented outside of the HI 60, such as a standalone unit, for example.

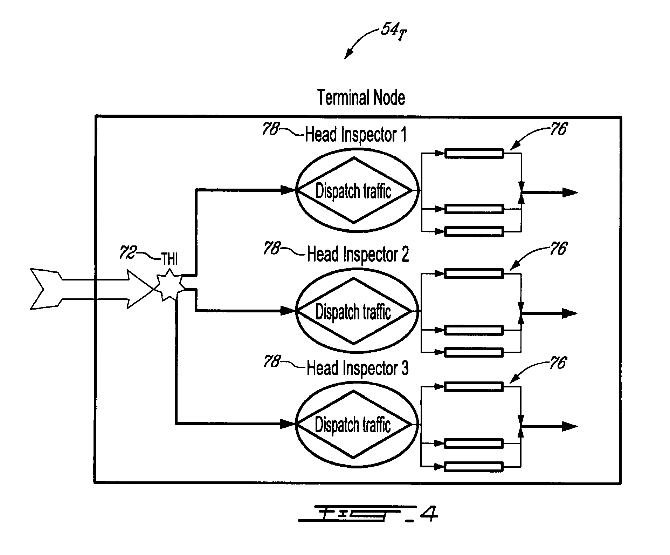

Now, turning to Figure 4, the terminal IS 54_{T} hosted in the terminal node will be described.

The terminal node hosting the terminal IS 54_{T} comprises a terminal head inspector (THI) 72, and a plurality of inspection stations 76, corresponding to the plurality of inspection stations 54 in the network 10. Each IS 76 comprises a head inspector 78, which corresponds to the HI 60 of the corresponding IS 54.

The THI 72 has substantially the same functions and tasks as the head inspector 60 of a regular IS 54, as will be described hereinbelow. For example, the THI 72 has the responsibility of following the different types of data flows originating from the nodes, such as eNodes B 16, 18 and 20. To do so, the THI 72 receives from each IS 54, through which the different data flows went, the ID list of all the scans that were applied to the different data flows. More specifically, the HI 60 of each IS 54 sends the ID list of the already applied scans to the THI 72. The THI 72 forwards the incoming traffic and the ID list of applied scans to the different head inspectors 78. Each head inspector 78 then divides the incoming data traffic into the different types of data flows.

For each type of data flows, the THI 72 has a detection list of all the detecting scans to be applied to the type of data flows in order to declare the data flow healthy. Therefore, when the data traffic arrives at the terminal node, the THI 72 can determine which scans have not been applied yet to a data flow by comparing the received ID list of the already applied scans against the detection list of all the scans to be applied. Therefore, in this case, the THI 72 acts as the detector 61 of Figure 3. Then, the THI 72 selects the subset of detecting scans which comprises all the detecting scans that have not been applied yet, i.e. the remaining scans in the detection list to be applied. The THI 72 can request the corresponding inspection station 76 to apply the selected subset of detecting scans to the data flow. The ID list of the already applied scans can be forwarded to the HI 78 of the IS 76. The corresponding IS 76 then applies the selected subset of detecting scans from the detection list to the data flow.

The terminal node is defined as the last node through which the data traffic goes before being sent out to another network, for example. Also, after this node, all the detecting scans in the detection list are applied to the data traffic.

As described above, the detection is based on pattern matching against known illegitimate patterns. Additionally in an alternative embodiment of the present invention, anomaly detection may be performed by the IS 54 or 76, where, instead of detecting known unwanted patterns, data traffic having unknown patterns are considered unwanted traffic. In this case, the data traffic is matched with known legitimate patterns, which are carried by the different detecting scans. At each node, the IS 54 applies a subset of detecting scans to the data traffic. If an IS 54 in a node fails to recognize the incoming data traffic as legitimate using its detecting scans, then the data traffic is forwarded to another IS 54, which also tries to match the incoming data traffic against some other known legitimate patterns of the detecting scans given by another subset of detecting scans. If, after all the known patterns of the detection list of detecting scans have been tried in the terminal node, for example, a match is still not found, then the data traffic is considered unwanted and is handled as described above, e.g. the data traffic is discarded and removed from the network 10.

It should be noted that in this case, the generator 52 generates detecting scans which represent known legitimate patterns of data traffic, i.e. the detecting scans are generated according to a wanted traffic pattern or signature database.

Furthermore, in another embodiment of the present invention, instead of detecting unwanted traffic, a particular traffic, which is a wanted or desired traffic, can be also detected, such as voice traffic for QoS purposes for example or duplication of traffic to send to a Law Enforcement Agency. In this case, the generator 52 generates detecting scans which are based on the wanted traffic pattern or signature database. At each node, the data traffic which matches the wanted traffic is treated accordingly.

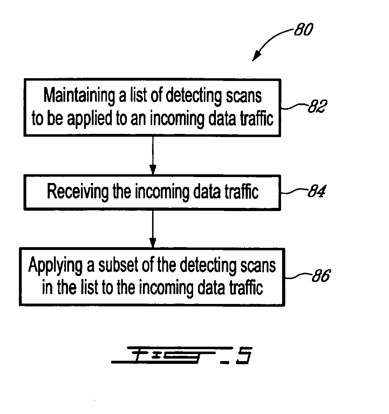

A method for detecting a particular traffic in a node of a communication network, such as the EPS network 10, is illustrated in Figure 5.

Referring concurrently to Figures 1 to 5, the method 80 for detecting the particular traffic in a node of the communication network, such as the EPS network 10 of Figure 1, according to a non-restrictive illustrative embodiment of the present invention, will be now described.

In step 82, a list of detecting scans to be applied to an incoming data traffic is maintained in the node.

In step 84, the incoming data traffic is received by the node.

Then in step 86, a subset of the detecting scans in the list is applied to the incoming data traffic so as to detect the particular traffic.

The detected particular traffic can be discarded in the case of unwanted traffic detection and in the case of wanted traffic detection, the detected particular traffic can be reserved for further processing.

It should be noted that the size of the subset can be determined according to the characteristics of the node, such as its configuration, its capacity, its memory use, or its central processing unit (CPU) load, etc.

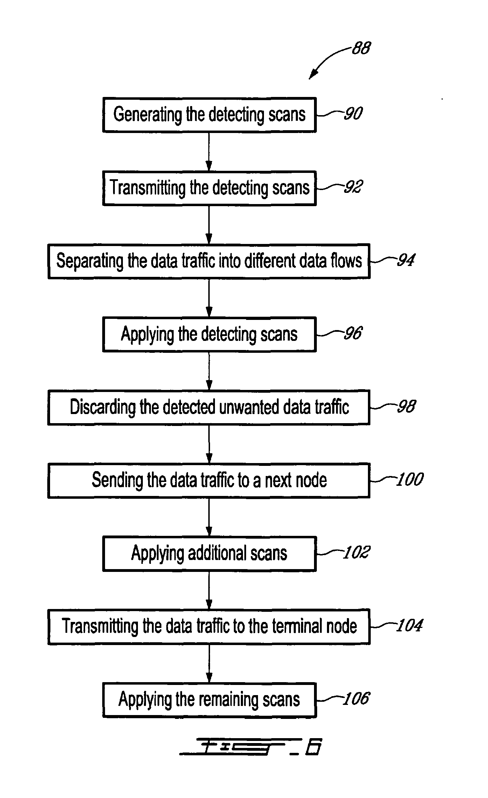

More specifically, now turning to Figure 6, an implementation example (method 88) of the method 80 for detecting the particular traffic in the communication network such as the EPS network 10 of Figure 1 will be described, with reference to Figures 2, 3 and 4. For simplicity reasons and as a non-limitative example, in the following description, the detecting system 50 can comprise the four IS 54 of Figure 2, where the IS 54 in the S-GW 22 is assumed to be the terminal IS 54_{T} and the node hosting the terminal IS 54_{T} is the terminal node.

In step 90 of the method 88, the generator 52 generates inspectors and a plurality of detecting scans carried by the inspectors, according, for example, to a SPAM, virus and any other unwanted traffic signature or pattern database in the case where detecting the particular traffic means detecting unwanted traffic. In the case of detecting unknown traffic (which is to be discarded), the detecting scans are generated according to a known and legitimate pattern data traffic database. In the case of detecting wanted traffic, the detecting scans are generated according to the wanted traffic pattern database.

The inspectors and their detecting scans can be further generated according to specific data traffic types, geographical characteristics and/or parameters of the network 10, for example. It should be noted that the inspectors and the detecting scans can be updated and modified over time based on their use in the different IS 54, as will be explained hereinafter.

In step 92, the generated detecting scans and the inspectors are distributed over the plurality of nodes so as to form a plurality of IS 54, according to the specific needs of each hosting node. More specifically, each head inspector 60 receives the generated detecting scans and inspectors and assigns them to a data flow so as to form the inspection chain 62 as illustrated in Figure 3. Furthermore, each head inspector 60 maintains a list of detecting scans to be applied to the incoming data traffic, called the detection list.

In step 94, the incoming data traffic going through an IS 54 is separated into different types of data flows by the head inspector 60 or a dividing module. Each data flow can be identified by its origin (source address), its type (e.g. VoIP, HTTP, etc.) and its destination (destination address) in the EPS network 10. It should be understood that other identification parameters and procedures can be used. The different data flows are then sent to the inspection chain 62 in the IS 54.

Upon receiving the different data flows, the inspection chain 62 applies a subset of detecting scans, through the inspectors, to the data flows, in step 96.

The number of detecting scans in the subset depends on the load of the node. For example, if the node eNode B 16 has a heavy load, then a few, one or two for example, scans are to be applied to the data flows. However, in the case where the eNode B 16 does not have a heavy load, it can perform a larger number of scans.

For example, as a measure of load of the node, the Central Processing Unit (CPU) load or memory load can be taken into consideration. A certain free time and fixed size of the memory can be dedicated to unwanted traffic detection. This measure can be referred to as the Free Process Time (FPT). The FPT is chosen in such a way as to not impact the quality of the services provided by the node. The FPT can be different for different types of data traffic, such as HTML or SSL, and for different nodes, depending on the load of the nodes. For example, if in the eNode B 16 the load of the CPU is used only by 20% and the memory use is at 50%, the CPU load can be increased to 30% and the memory use to 60% without affecting the quality of the services provided by the eNode B 16. These increases can be then used for the detection of the particular traffic. It should be understood that other measures can be used for determining the load and resources of a node, such as a latency measure or processing time for each data packet.

Upon application of the scans, if a match is found, in the case of detecting unwanted traffic through known illegitimate patterns, the match is transmitted to the HI 60. Also, in this case, the detected unwanted data traffic can be discarded right away so as to eliminate the unwanted traffic as soon as possible in the network 10. This is done in step 98.

Once the application of the subset of detecting scans is done, according to the load of the node, the rest of the data traffic is sent to a next node in the EPS network 10, as an outgoing traffic, the next node being identified from the data traffic. This is done in step 100.

In the case of detecting wanted traffic, if there is a match upon application of the subset of detecting scans, then the detected wanted data traffic can be directed to a specific destination for further processing for example. However, if no match has been found, then the traffic is sent to a next node, as an outgoing traffic, the next node being identified from the data traffic; this step is still done in step 100.

In the case of detecting unwanted/unknown traffic, which have unknown patterns, the data traffic is discarded only if no match has been found after all the detecting scans of the detection list have been applied. If a match is found, then the data traffic can be sent to a next node, as an outgoing traffic, the next node being identified from the data traffic; this step is also done in step 100

Also, the detecting scans applied in step 96 are marked down in a list by using their IDs. Indeed, a list of IDs of all the applied detecting scans is kept. The IDs of the already applied detecting scans or of the detecting scans to be applied to the data traffic in this node are added into the ID list. The ID list is then transmitted, through a communication channel, for example, to the next node, and more specifically to the head inspector 60 of the next node in which the data traffic is received.

Upon receiving the data traffic and the ID list of applied scans, the next node determines, through the detector 61 for example, if at least one detecting scans still need to be applied to the incoming data traffic. If so, then a subset of additional detecting scans is selected from the determined at least one detecting scans. In step 102, the selected subset of additional scans will be applied to the received incoming data traffic, separated into the different data flows, the size of the subset being dependent on the load and FPT of this next node, as mentioned earlier. The subset of applied scans in this step is different from those applied in step 96, so that the total number of scans applied to the data traffic is incremental and accumulated after each passage of the data traffic through a node. Each time that the data traffic goes through a node, the ID list is updated and the updated ID list is transmitted to the next node. Alternatively, instead of transmitting the IDs of the applied scans, the data traffic itself can be marked in relation to the applied scans.

Step 96 to step 100 are repeated as the data traffic flows in the network 10, from node to node, until it reaches the terminal node.

In step 104, the data traffic is transmitted to the terminal node as shown in Figure 4, which can be assumed to be the S-GW22 of Figure 2, for example.

The incoming data traffic is received by the THI 72. Also, the ID list of the already applied detecting scans is transmitted to the terminal node and received by the THI 72. The THI 72 then determines if all the detecting scans of the detection list have been applied to the incoming data traffic. If not, then the THI 72 selects a subset of all the detecting scans which were not applied yet, i.e. the remaining detecting scans in the detection list. Then, the THI 72 sends the data traffic to the different head inspectors 78 in the terminal node. Each of the head inspectors 78 then separates the received data traffic into the different types of data flows corresponding to the different data flows in the node where the data traffic comes from. The THI 72 can request each HI 78 to apply the subset of remaining scans in the detection list to a particular data flow. In step 106, the subset of remaining scans in the detection list is applied to the data flow.

Because the terminal node is the last node, through which the data traffic goes before it is sent out to another network for example, it needs to make sure that all the scans of the detection list have been applied to the data traffic.

It should be noted that the detecting system 50 of Figure 2 also comprises a detection evolution mechanism, based on a "natural selection" for example. At each IS 54, the detecting scans and the inspectors are sorted according to the number of hits on the scans of patterns during a certain period of time, the period of time being configurable. The number of hits is recorded by the counter 65 in Figure 3, and stored in the HI 60 for example. The most active inspectors and detecting scans are kept in the IS 54 whereas the least used inspectors and detecting scans are removed from the IS 54; they are replaced by new inspectors and their new detecting scans, generated by the generator 52. For example, following this detection evolution mechanism, a detecting scan detecting Chinese spam would be eliminated in Europe but the same scan would be very active in China. Additionally and/or alternatively, a less active detecting scan may continue to be in use, albeit with a lower assigned priority. In this case, the less active detecting scan is down-prioritized in the IS 54.

When a new inspector and its detecting scans are added to an IS 54 hosted in an eNode B for example, the HI 62 updates its detection list of detecting scans. Furthermore, the terminal 54T also receives the new inspector and its detecting scans and updates its list of detecting scans. However, there is no need of having a simultaneous communication between the IS 54 and the terminal IS 54T concerning the newly added inspector and its detecting scans. The worst case that can happen is that the new detecting scans will be applied twice to the same data flow, once in the IS 54 and once in the terminal 54T.

However, before removing (or down-prioritizing) an inspector and its detecting scans, such as the least used inspector and detecting scans, from the inspection chain 62, the IS 54 should communicate first with the THI 72. More specifically, the IS 54 should wait for a confirmation from the THI 72 of the terminal node that the inspector and its detecting scans to be removed (or down-prioritized) have been already applied to a data flow in the terminal node or in a previous node. In that case, this inspector and its detecting scans can be removed (or down-prioritized).

By deploying the non-restrictive embodiments of the present invention, it is believed that less hardware in each node is required for a particular traffic detection. Also, in the case of detecting unwanted traffic, since the detected unwanted traffic is eliminated as soon as it is detected, which can be early in the network, bandwidth is saved for all the subsequent nodes and transmissions.

Although the present invention has been described in the foregoing specification by means of a non-restrictive illustrative embodiment, this illustrative embodiment can be modified at will within the scope of the subject invention.

## Claims

1. A method for detecting a particular data traffic in a communication network (10) having a plurality of nodes (16, 18, 20), the method comprising the steps of:
maintaining (S80) a list of detecting scans to be applied to an incoming data traffic;
receiving (S84) the incoming data traffic;
applying (S86) a subset of the detecting scans in the list to the incoming data traffic;
**characterized by**:
forwarding said traffic to a next node with an indication as to which scans of said list of detecting scans have been applied, such that the total number of scans applied to the data traffic is incremental and accumulated after each passage of the data traffic through a node until a terminal node is reached.

2. A method as defined in claim 1, further comprising a step of marking down the detecting scans that have been applied to the incoming data traffic, where the step of marking down optionally includes one of:
keeping a list of IDs of the detecting scans applied to the incoming data traffic; and
keeping a list of IDs of the detecting scans to be applied to the incoming data traffic.

3. A method as defined in claim 2, said forwarding step comprising a step of sending the incoming data traffic into an outgoing traffic to a next node, the next node being identified from the incoming traffic and optionally comprising sending the list of IDs of the applied detecting scans to the next node.

4. A method as defined in claim 1, upon receiving the incoming traffic, further comprising a step of determining if all detecting scans listed on the list of detecting scans have been applied, wherein the step of applying further comprises applying the subset of detecting scans that comprises all detecting scans not already applied to the incoming traffic.

5. A method as defined in claim 1, further comprising a step of generating the list of detecting scans.

6. A method as defined in claim 5, wherein the particular data traffic includes one of wanted data traffic and unwanted data traffic and wherein the step of generating the list of detecting scans includes generating the detecting scans according to one of a wanted traffic signature, and unwanted traffic signature and a pattern database.

7. A method as defined in claim 1, further comprising a step of separating the received data traffic into different types of data flows and optionally comprising assigning different detecting scans to the different types of data flows.

8. A method as defined in claim 1, wherein the step of applying the subset comprises selecting the subset according to a load of a node, the step of selecting optionally comprising determining the load of a node in accordance with memory use and Central Processing unit, CPU, load of the node.

9. A method as defined in claim 6, wherein the step of applying the subset comprises performing pattern matching of the incoming data traffic and perform one of the steps of:
discarding the data traffic when a pattern match is determined when the data is unwanted data; and
directing the data traffic to a particular destination if a pattern match is determined when the data traffic is wanted.

10. A method as defined in claim 1, further comprising a step of measuring a performance of each detecting scan in the list by measuring a number of hits of the detecting scan within a period of time and optionally comprising performing one of:
removing a detecting scan having a number of hits lower than the number of hits of other detecting scans; and
removing a detecting scan having a number of hits lower than the number of hits of other detecting scans and replacing the removed scan with a new detecting scan.

11. A network node for detecting a particular traffic in a communication network (10) having a plurality of nodes (16, 18, 20), the network node comprising:
- a list of detecting scans to be applied to an incoming data traffic;
- an input (63) for receiving the incoming data traffic;
**characterized by**:
- an inspector (3, 4, 5) configured to apply a subset of detecting scans in the list to the incoming data traffic and to provide an indication to a next node which is configured to receive the traffic as to which scans of said list of detecting scans have been applied, such that the total number of scans applied to the data traffic is incremental and accumulated after each passage of the data traffic through a node until a terminal node is reached.

12. A network node as defined in claim 11, further comprising a list containing IDs of the detecting scans already applied to the incoming data traffic, where the list optionally contains IDs of the detecting scans to be applied to the incoming traffic.

13. A network node as defined in claim 11, further comprising a detector (61) for detecting if at least one detecting scan needs to be applied to the incoming data traffic, wherein the inspector (3, 4, 5) is further configured to select the subset of detecting scans from the at least one detecting scan to be applied to the incoming data traffic.

14. A network node as defined in claim 13, wherein said node is a terminal node (54), and wherein the detector (61) is further configured to detect if all detecting scans listed on the list of detecting scans have been applied, wherein the inspector (3, 4, 5) is further configured to apply the subset of detecting scans that comprises all detecting scans not already applied to the incoming data traffic.

15. A network node as defined in claim 11, further comprising a generator (52) of detecting scans, the generator (52) configured to perform at least one of:
updating the list of detecting scans through generating new detecting scans;
generating the list of detecting scans according to an unwanted traffic signature or pattern database; and
generating the list of detecting scans according to a wanted traffic signature or pattern database.

16. A network node as defined in claim 11, wherein the inspector (3, 4, 5) is further configured to remove at least one of:
data traffic that has been detected as matching an unwanted traffic pattern; and
data traffic that has been detected as not matching a wanted traffic pattern.

## Patentansprüche

1. Verfahren zum Erfassen eines bestimmten Datenverkehrs in einem Kommunikationsnetz (10), das eine Vielzahl von Knoten (16, 18, 20) aufweist, wobei das Verfahren die Schritte umfasst zum:
Aufrechterhalten (S80) einer Liste erfassender Scans, die für einen eingehenden Datenverkehr verwendet werden;
Empfangen (S84) des eingehenden Datenverkehrs;
Anwenden (S86) einer Untergruppe der erfassender Scans in der Liste für den eingehenden Datenverkehr;
**gekennzeichnet durch**:
Weiterleiten des Verkehrs an einen nächsten Knoten mit einer Anzeige dahingehend, welche Scans der Liste erfassenden Scans angewendet wurden, so dass die gesamte Anzahl von Scans, die an den Datenverkehr angewendet werden, inkrementell ist und nach jedem Durchgang des Datenverkehrs **durch** einen Knoten akkumuliert wird, bis ein abschließender Knoten erreicht wird.

2. Verfahren nach Anspruch 1, ferner mit einem Schritt zum Vermerken der erfassenden Scans, die an dem eingehenden Datenverkehr angewendet wurden, wobei der Schritt zum Vermerken optional enthält:
Unterhalten einer Liste von IDs der erfassenden Scans, die an dem eingehenden Datenverkehr angewendet wurden; oder
Unterhalten einer Liste von IDs der erfassenden Scans, die an dem eingehenden Datenverkehr angewendet werden.

3. Verfahren nach Anspruch 2, wobei der Weiterleitungsschritt einen Schritt umfasst zum Senden des eingehenden Datenverkehrs in einem ausgehenden Verkehr an einen nächsten Knoten, wobei der nächste Knoten aus dem eingehenden Verkehr identifiziert wird, und optional umfassend ein Senden der Liste von IDs der angewendeten erfassenden Scans an den nächsten Knoten.

4. Verfahren nach Anspruch 1, ferner umfassend, bei Empfang des eingehenden Verkehrs, einen Schritt zum Bestimmen, ob alle erfassende Scans, die in der Liste erfassender Scans aufgelistet sind, angewendet wurden, wobei der Schritt zum Anwenden ferner ein Anwenden der Untergruppe erfassender Scans umfasst, die alle erfassenden Scans umfasst, die nicht bereits an dem eingehenden Verkehr angewendet wurden.

5. Verfahren nach Anspruch 1, ferner umfassend einen Schritt zum Erzeugen der Liste erfassender Scans.

6. Verfahren nach Anspruch 5, wobei der bestimmte Datenverkehr einen gewollten Datenverkehr oder einen ungewollten Datenverkehr enthält, und wobei der Schritt zum Erzeugen der Liste erfassender Scans ein Erzeugen der erfassenden Scans gemäß von einem von einer gewollten Verkehrssignatur, und einer ungewollten Verkehrssignatur und einer Musterdatenbank enthält.

7. Verfahren nach Anspruch 1, ferner umfassend einen Schritt zum Separieren des empfangenen Datenverkehrs in unterschiedliche Typen eines Datenflusses, und optional umfassend ein Zuweisen unterschiedlicher erfassender Scans für die unterschiedlichen Typen von Datenflüssen.

8. Verfahren nach Anspruch 1, wobei der Schritt zum Anwenden der Teilgruppe ein Auswählen der Teilgruppe gemäß einer Last von einem Knoten umfasst, der Schritt zum Auswählen optional ein Bestimmen der Last eines Knotens gemäß einer Speicherverwendung und einer Central-Processing-Unit- CPU, Last des Knotens umfasst.

9. Verfahren nach Anspruch 6, wobei der Schritt zum Anwenden der Untergruppe ein Durchführen eines Musterabgleichs des eingehenden Datenverkehrs umfasst, sowie die Durchführung von einem der Schritte zum:
Verwerfen des Datenverkehrs, wenn eine Musterübereinstimmung bestimmt wird, wenn die Daten ungewollte Daten sind; und
Leiten des Datenverkehrs an ein bestimmtes Ziel, wenn eine Musterübereinstimmung bestimmt wird, wenn der Datenverkehr gewollt ist.

10. Verfahren nach Anspruch 1, ferner umfassend einen Schritt zum Messen einer Performance von jedem erfassenden Scan in der Liste durch Messen einer Anzahl von Treffern der erfassenden Scans in einer Zeitperiode, und optional umfassend ein Durchführen von einem von:
Entfernen eines erfassenden Scans, der eine Anzahl von Treffern aufweist, die geringer als die Anzahl von Treffern anderer erfassender Scans ist; und
Entfernen eines erfassenden Scans, der eine Anzahl von Treffern aufweist, die geringer als die Anzahl von Treffern anderer erfassender Scans ist, und Ersetzen des entfernten Scans mit einem neuen erfassenden Scan.

11. Netzknoten zum Erfassen eines bestimmten Verkehrs in einem Kommunikationsnetz (10), das eine Vielzahl von Knoten (16, 18, 20) aufweist, wobei der Netzknoten umfasst:
- eine Liste erfassender Scans, die an einem eingehenden Datenverkehr angewendet werden;
- eine Eingabe (63) zum Empfangen des eingehenden Datenverkehrs;
**gekennzeichnet durch**:
- ein Inspektionsmittel (3, 4, 5), das konfiguriert ist zum Anwenden einer Teilgruppe der erfassenden Scans in der Liste an dem eingehenden Datenverkehr und zur Bereitstellung einer Anzeige für einen nächsten Knoten, der konfiguriert ist zum Empfangen des Verkehrs, dahingehend, welche Scans der Liste erfassender Scans angewendet wurden, so dass die gesamte Anzahl von Scans, die an dem Datenverkehr angewendet wurden, inkrementell ist und nach jedem Durchgang des Datenverkehrs **durch** einen Knoten akkumuliert wird, bis ein endgültiger Knoten erreicht ist.

12. Netzknoten nach Anspruch 11, ferner umfassend eine Liste, die IDs der erfassenden Scans enthält, die bereits an dem eingehenden Datenverkehr angewendet wurden, wobei die Liste optional IDs der erfassenden Scans enthält, die an dem eingehenden Verkehr angewendet werden.

13. Netzknoten nach Anspruch 11, ferner umfassend einen Detektor (61) zum Erfassen, ob zumindest ein erfassender Scan an dem eingehenden Datenverkehr angewendet werden muss, wobei das Inspektionsmittel (3, 4, 5) ferner konfiguriert ist zum Auswählen der Untergruppe von erfassenden Scans aus dem zumindest einen erfassenden Scan, der an dem eingehenden Datenverkehr angewendet wird.

14. Netzknoten nach Anspruch 13, wobei der Knoten ein endgültiger Knoten (54) ist, und wobei der Detektor (61) ferner konfiguriert ist zum Erfassen, ob alle erfassenden Scans, die in der Liste erfassender Scans aufgelistet sind, angewendet wurden, wobei das Inspektionsmittel (3, 4, 5) ferner konfiguriert ist zum Anwenden der Teilgruppe erfassender Scans, die alle erfassenden Scans umfasst, die an dem eingehenden Datenverkehr nicht bereits angewendet wurden.

15. Netzknoten nach Anspruch 11, ferner umfassend einen Generator (52) von erfassenden Scans, wobei der Generator (52) konfiguriert ist zum Durchführen von zumindest einem von:
Aktualisieren der Liste zu erfassender Scans durch Erzeugen neuer erfassender Scans;
Erzeugen der Liste zu erfassender Scans gemäß einer ungewollten Verkehrssignatur oder einer Musterdatenbank; und
Erzeugen der Liste von zu erfassenden Scans gemäß einer gewollten Verkehrssignatur oder einer Musterdatenbank.

16. Netzknoten nach Anspruch 11, wobei die Inspektionseinheit (3, 4, 5) ferner konfiguriert ist zum Entfernen von zumindest einem von:
Datenverkehr, der als übereinstimmend mit einem ungewollten Verkehrsmuster erfasst wurde; und
Datenverkehr, der als nicht übereinstimmend mit einem gewollten Verkehrsmuster erfasst wurde.

## Revendications

1. Procédé de détection d'un trafic de données particulier dans un réseau de communication (10) possédant une pluralité de noeuds (16, 18, 20), le procédé comprenant les étapes consistant à:
maintenir (S80) une liste de patrons de détection à appliquer à un trafic de données entrant;
recevoir (S84) le trafic de données entrant;
appliquer (S86) un sous-ensemble des patrons de détection de la liste au trafic de données entrant;
**caractérisé par** l'étape consistant à:
transmettre ledit trafic vers un noeud suivant avec une indication desquels desdits patrons de ladite liste de patrons de détection ont été appliqués, de telle sorte que le nombre total de patrons appliqués au trafic de données est incrémentiel et cumulé après chaque passage du trafic de données par un noeud, jusqu'à ce qu'un noeud final soit atteint.

2. Procédé selon la revendication 1, comprenant en outre l'étape consistant à noter les patrons de détection qui ont été appliqués au trafic de données entrant, l'étape consistant à noter comprenant optionnellement l'une des étapes consistant à:
tenir une liste d'identificateurs des patrons de détection appliqués au trafic de données entrant; et
tenir une liste d'identificateurs des patrons de détection à appliquer au trafic de données entrant.

3. Procédé selon la revendication 2, dans lequel ladite étape de transmettre comprend une étape consistant à envoyer le trafic de données entrant comme trafic de données sortant vers un noeud suivant, le noeud suivant étant identifié à partir du trafic entrant et comprend optionnellement une étape consistant à envoyer au noeud suivant la liste des identificateurs des patrons de détection appliqués.

4. Procédé selon la revendication 1, comprenant en outre, sur réception du trafic entrant, l'étape consistant à déterminer si tous les patrons de détection énumérés dans la liste des patrons de détection ont été appliqués, dans lequel l'étape d'appliquer comprend en outre l'étape consistant à appliquer le sous-ensemble de patrons de détection qui comprend tous les patrons de détection qui n'ont pas encore été appliqués au trafic entrant.

5. Procédé selon la revendication 1, comprenant en outre l'étape consistant à générer la liste des patrons de détection.

6. Procédé selon la revendication 5, dans lequel le trafic de données particulier comprend soit le trafic de données souhaité soit le trafic de données non souhaité et dans lequel l'étape de générer la liste des patrons de détection comprend générer les patrons de détection en fonction d'un des éléments suivants: signature de trafic souhaité, signature de trafic non souhaité et base de données de modèles.

7. Procédé selon la revendication 1, comprenant en outre une étape consistant à séparer le trafic de données reçu en différents types de flux de données et comprend optionnellement l'étape consistant à assigner différents patrons de détection aux différents types de flux de données.

8. Procédé selon la revendication 1, dans lequel l'étape d'appliquer le sous-ensemble comprend l'étape consistant à sélectionner le sous-ensemble en fonction d'une charge d'un noeud, l'étape de sélectionner comprenant optionnellement l'étape consistant à déterminer la charge d'un noeud en fonction de l'utilisation de la mémoire et de la charge de l'unité centrale de traitement, CPU, du noeud.

9. Procédé selon la revendication 6, dans lequel l'étape d'application du sous-ensemble comprend l'étape consistant à effectuer un appariement de formes du trafic de données entrant et à effectuer une ou l'autre des étapes consistant à:
ignorer le trafic de données lorsqu'un appariement de formes est établi, lorsque les données sont des données non souhaitées; et
diriger le trafic de données vers une destination particulière lorsqu'un appariement de formes est établi, lorsque le trafic de données est souhaité.

10. Procédé selon la revendication 1, comprenant en outre l'étape consistant à mesurer une performance de chaque patron de détection dans la liste, en mesurant le nombre des résultats positifs du patron de détection sur une période de temps et comprenant en outre optionnellement l'une ou l'autre des étapes consistant à:
supprimer un patron de détection ayant un nombre de résultats positifs inférieur au nombre de résultats positifs d'autres patron de détection; et
supprimer un patron de détection ayant un nombre de résultats positifs inférieur au nombre de résultats positifs d'autres patrons de détection et remplacer le patron supprimé par un nouveau patron de détection.

11. Noeud de réseau destiné à détecter un trafic particulier sur un réseau de communication (10) possédant une pluralité de noeuds (16, 18, 20), le noeud de réseau comprenant:
- une liste de patron de détection à appliquer à un trafic de données entrant;
- une entrée (63) destinée à recevoir le trafic de données entrant;
- un inspecteur (3, 4, 5) configuré pour appliquer un sous-ensemble des patrons de détection de la liste au trafic de données entrant et pour fournir une indication, à un noeud suivant qui est configuré pour recevoir le trafic, desquels des dits patrons de ladite liste de patrons de détection ont été appliqués, de telle sorte que le nombre total de patrons appliqués au trafic de données est incrémentiel et cumulé après chaque passage du trafic de données par un noeud, jusqu'à ce qu'un noeud final soit atteint.

12. Noeud de réseau selon la revendication 11, comprenant en outre une liste contenant des identificateurs des patrons de détection déjà appliqués au trafic de données entrant, la liste contenant optionnellement des identificateurs des patrons de détection à appliquer au trafic entrant.

13. Noeud de réseau selon la revendication 11, comprenant en outre un détecteur (61) destiné à détecter si au moins un patron de détection doit être appliqué au trafic de données d'entrée, dans lequel l'inspecteur (3, 4, 5) est en outre configuré pour sélectionner le sous-ensemble de patrons de détection parmi ledit au moins un patron de détection à appliquer au trafic de données entrant.

14. Noeud de réseau selon la revendication 13, dans lequel ledit noeud est un noeud final (54), et dans lequel le détecteur (61) est en outre configuré pour détecter si tous les patrons de détection énumérés dans la liste des patrons de détection ont été appliqués et dans lequel l'inspecteur (3, 4, 5) est en outre configuré pour appliquer le sous-ensemble de patrons de détection qui comprend tous les patrons de détection qui n'ont pas encore été appliqués au trafic de données entrant.

15. Noeud de réseau selon la revendication 11, comprenant en outre un générateur (52) de patrons de détection, le générateur (52) étant configuré pour exécuter au moins une des étapes suivantes:
mettre à jour la liste des patrons de détection en générant de nouveaux patrons de détection;
générer la liste de patrons de détection en fonction d'une signature de trafic non souhaité ou d'une base de données de modèles; et
générer la liste des patrons de détection en fonction d'une signature de trafic souhaité ou d'une base de données de modèles.

16. Noeud de réseau selon la revendication 11, dans lequel l'inspecteur (3, 4, 5) est configuré en outre pour supprimer au moins l'un des éléments suivants:
le trafic de données qui a été identifié comme correspondant à un motif de trafic non souhaité ; et
le trafic de données qui a été identifié comme correspondant à un motif de trafic souhaité.
